## Europäisches Patentamt
## European Patent Office
## Office européen des brevets

(19)

(11) Publication number: **0 010 354**
**B1**

(12)

# EUROPEAN PATENT SPECIFICATION

(45) Date of publication of patent specification: **20.07.83**

(21) Application number: **79301903.5**

(22) Date of filing: **17.09.79**

(51) Int. Cl.³: **B 43 L 1/12, G 09 F 1/00, C 09 D 5/04**

(54) **A magnetic panel and a display assembly incorporating such panel.**

(30) Priority: **19.09.78 GB 3738278**
**28.04.79 GB 7914855**

(43) Date of publication of application:
**30.04.80 Bulletin 80/9**

(45) Publication of the grant of the patent:
**20.07.83 Bulletin 83/29**

(84) Designated Contracting States:
**AT BE CH DE FR GB LU NL SE**

(56) References cited:
**DE - B - 1 669 137**
**DE - B - 2 332 078**
**DE - B - 2 345 560**
**DE - B - 2 641 353**
**US - A - 3 938 263**
**US - A - 3 982 334**
**US - A - 4 143 472**

**DEFAZET, Vol. 31, No. 2, 1977, Stuttgart**
**J. SCHIEFER "Verwendung von Rheologiehilfsmitteln" pages 62 to 65**

(73) Proprietor: **Fox, Malcolm Francis**
**237 Hinckley Road Leicester Forest East**
**Leicester LE3 3PH (GB)**

(72) Inventor: **Fox, Malcolm Francis**
**237 Hinckley Road Leicester Forest East**
**Leicester LE3 3PH (GB)**
Inventor: **Craig, Peter Marshall**
**Bretton Way**
**Bretton Peterborough PE3 8YA (GB)**

(74) Representative: **Watson, Anthony Stephen et al,**
**Bailey, Walsh & Co 5 York Place**
**Leeds LS1 2SD (GB)**

Courier Press, Leamington Spa, England

## A magnetic panel and a display assembly incorporating such panel

This invention relates to magnetic panels.

A magnetic panel according to the invention has many uses. A first and prime intended use of a magnetic panel according to the invention is in a magnetic drawing board assembly by means of which drawings and other markings can be produced and erased as required by the use of magnetic styli or the like. Such a magnetic drawing board assembly embodying a magnetic panel according to the invention is intended primarily for use as a toy or plaything by children, but the magnetic drawing board assembly may also be used in educational establishments such as schools and colleges, both in place of the conventional blackboard or as a desk-top writing or drawing board. In addition, a magnetic panel according to the invention may be used as a display board or notice board on a large or small scale, and also as a pocket — or attache case — notebook.

Other uses of a magnetic panel according to the invention are firstly as an electrical display board, and secondly in games where for instance the panel may have a "track" applied thereto by a magnetic stylus, which "track" would be engaged by means adapted to follow the path of the track. The magnetic panel according to the invention will also have many other uses which will readily present themselves to persons skilled in the art.

It is already known to provide for example magnetic drawing boards. United States Re-issue Patent No. 25822, describes a magnetic writing materials set in which balls consisting of magnetized spheres are enclosed between front and rear sheets containing a friction-lessening solution, said spheres being rotatable within said solution and relative to the front and rear sheets so as to produce or remove a display by means of a magnet which is moved over and in contact with one or other of said sheets. The spheres are magnetized with a north pole and a south pole, the respective poles being of differing colours, so that as "selected" spheres are acted upon by the magnet, then those spheres will rotate and present a contrasting colour to that of the adjacent spheres — which are not acted upon by the magnet — and hence a display will be produced.

United States Patent No. 3,103,751 discloses a chalkless writing board in which a plurality of metallic pins are located between a front rigid transparent non-magnetic plate and a back non-magnetic plate having a plurality of apertures therein in which said pins are slidable from a non-viewing position to a viewing position, the pins being movable by means of a magnetic stylus which is moved across the face of the front non-magnetic plate.

United States Patent No. 2,853,830 discloses a magnetic toy in which magnetic particles are movable by a magnetic wand which is movable over the outer surface of a cover of said toy so as to collect and deposit batches of the magnetic particles on selected portions of a figure portion of a base of said toy. With the magnetic toy of this United States patent it is possible to place the hair, beard and other facial "hair" on said figure.

In United States Patent No. 2,589,601 a magnetic slate comprises a shallow non-magnetic box having a transparent cover, the box containing a plurality of small magnetic particles and a plurality of light non-magnetic particles of a contrasting colour to said magnetic particles and sufficient to substantially cover the layer of said magnetic particles, the magnetic particles being movable towards the cover through said non-magnetic particles by means of a magnetic pencil movable over the outer surface of the cover. The "display" produced is readily visible owing to the contrast of colours between the magnetic and the non-magnetic particles.

United States Patent No. 3,222,481 discloses a fluid containing magnetic flakes in suspension, a magnetic field being generated so that the magnetic flakes can be re-orientated to be parallel to one another in order to generate the display. The magnetic flakes are re-orientated by means of a magnetic stylus.

Similarly, United States Patent No. 3,229,281 discloses the generation of a magnetic field in a fluid containing fine magnetic particles in suspension in order to cause, by the action of a magnetic stylus, the fine magnetic particles to move, so that a portion of the fine magnetic particles being acted upon by the magnetic field is concentrated to generate the display.

In the United States Patent No. 3982334, there is disclosed a device adapted to provide a visual display, the device comprising a plurality of rotatable, multicoloured, permanently magnetised ferritic micromagnets disposed in compartments in a cavity within an envelope body having a transparent surface. The micromagnets are non-magnetically interactive. The visual display device is a substantially transparent polymer sheet containing relatively small compartments therein which have cellular and/or structural barriers which prevent migration of the micromagnets from one compartment to another. The micromagnets, rotatable under the influence of an exterior magnetic field, are surrounded with a preferably thixotropic micellar-based suspension or carrier fluid which allows rotation of the micromagnets.

United States Patent No. 3938263 discloses a visual display device which comprises a substrate having a coating of a continuous hardened composition containing as a discontinuous phase discrete fluid filled inclusions containing colour coded micromagnets. The micromagnets, which are viewable through and rotatable in the composition under the influence of an exterior magnetic field, have at least two separate and distinct colour zones and a constant magnetization vector with respect to these colour zones. The fluid, being transparent and of a viscosity and density sufficient to hold the micromagnets in suspension for at least a period of minutes, contains a finely divided suspending agent.

Other prior art patents of interest are United Kingdom Patents Nos. 1,306,981; 1,168,217; 957,283 and 511,336 all of which disclose the use of magnetic particles, flakes or the like to produce displays.

In the above prior art reference, the systems and devices suffer one or more of numerous disadvantages, such disadvantages being complexity of design, the number of component parts required for the device to operate functionally and efficiently, and the resultant cost of producing the device. In addition, in many instances the displays generated are not of a permanent character (when required to be so) in that the magnetic particles or flakes or similar component parts had a tendency to fall away so that the display information content was lost.

In an attempt to overcome these and other disadvantages, and particularly in an attempt to overcome the latter disadvantage, it has been proposed in United States Patent No. 4,143,472 to introduce into the fluid a fine-grain inorganic thickening agent in order to give the fluid a predetermined minimum flow point so as to inhibit the falling away or dropping out of the display. The flow point of the fluid is such that it enables the magnetic particles to be pulled upwardly through the fluid to form the display, and yet prevent unwanted falling away of the magnetic particles from the display surface. The thickening agents proposed by said United States Patent No. 4,143,472 are all solids of a very fine grain and therefore of a very high surface area. Their effect upon the dispersing liquid depends upon the inter-action of their surface with the dispersing liquid, so that there are two phases — a solid and a liquid.

The fine grain thickeners proposed by the United States patent are in the form of fine particles which to the human eye are small but which at the molecular level are massive. There is very little exchange between the solvent (fluid) and the piece of thickener composed of individual molecules. It is a surface effect. Molecules below the surface of the particle do not, and cannot at any time, contribute to the thickening action. The number of molecules in a particle of the fine grain thickening agent cannot have a separate existence of any consequence.

The use of solid fine grain thickeners necessitates the use of a micronizing mill to effect the dispersion of the thickening agent, such use being time and energy consuming, and the apparatus is expensive. In addition, strict control of the constituent parts of the fluid is necessary in the system according to the said United States Patent.

The "mix" of the United States Patent is susceptible to variations in composition. Potentially disastrous contaminants such as water, adhesives, solvents etc, will effect the properties of the thickening agent so that they become efficient. In addition, the recovery time of the fluid in United States Patent No. 4,143,472 is slow after separation, such recovery time being of paramount importance to enable the panel to be used immediately and repeatedly.

The fine grain thickeners proposed by United States Patent No. 4,143,472 particularly Bentone has to be treated, i.e. it cannot be used as it is mined. It needs to be dried and treated, with ammonia, to make it more effective and since only the particle surface is subjected to the treatment, then only the surface will have any effect on the thickening of the dispersing fluid.

United States Patent No. 4,143,472 suggests (Col. 5, L. 36—43) that a high molecular weight organic substance dispersed or dissolved in a dispersion medium to give the medium a high yield value will be so sensitive to temperature variations, that the physical properties of the fluid can easily change, resulting in the magnetic fine grain particles becoming inactive and sedimentation occurring. This has not been found to be true. The recovery time of the fluid is the important factor, and it has been found that recovery time is relatively slow when fine grain thickeners are used as the thickening agent.

The present invention seeks to obviate the disadvantages of the known systems.

Accordingly, the present invention provides a magnetic panel comprising an edge-sealed envelope formed of a front transparent or translucent sheet of a non-magnetic material and a rear sheet of non-magnetic material, said sheets being spaced apart so as to provide a chamber therebetween, said chamber including a plurality of pockets and a fluid mix located in said chamber, said fluid mix consisting of a surface active dispersing agent, a micellar-based pseudo-plastic thickening agent, a magnetic coloured pigment including magnetic particles of finely divided iron powder or iron oxide, a dispersion medium being a paraffin system, a water only system or a paraffinic water system, characterised by said surface active dispersing agent being a high molecular weight unsaturated organic acid ester neutralised with a long chain polyamine-amide.

The micellar-based pseudo-plastic thickening agent will preferably be selected from carbohydrate esters; aluminium soaps; modified sorbitols and their derivatives; aromatic alcohols and their derivatives; soaps of alkali and alkaline earth metals (groups 1 and 2a of the Periodic Table); organic polymers; paraffin hydrocarbons; petroleum sulphonates; vegetable products (as herein defined); two component systems (as herein defined); single synthetic organic compounds (as herein defined); non-ionic surfactants; amine and carbon dioxide; esters, amides or amine salts of N-acylamino acids; aliphatic polyhydric alcohols and an alkanolamine salt of phosphate esters of ethoxylated aliphatic alcohols; amides and amines derived from fatty acids; diisopropanolamine oleate and ammonia; cyclic carboxylic acid monoglyceride; sorbitol or glucose benzaldehyde; stearate soaps and a polyhydric alcohol; stearic acid and polyhydric alcohol; reduction of chromium (iii) ions by thiosulphate to chromium (ii) ions and a polymer.

The envelope will preferably include in its chamber a plurality of pockets for receiving the fluid mix, and will preferably consist of an upper or front transparent or translucent sheet of a synthetic plastics material, and a honeycomb core located between said sheets, said sheets being affixed to either side of said core to seal the pockets of said honeycomb core in isolation one from the other. The edges of the sheets will be secured together preferably by welding. Alternatively the envelope may consist of an upper or front transparent or translucent sheet of a synthetic plastics material, a lower or rear sheet of a synthetic plastics material and a vacuum formed or otherwise moulded multi-cavity sheet located between said sheets and to which the sheets are affixed at either side of said multi-cavity sheet. In yet another alternative, the envelope may consist of an upper transparent or translucent sheet of a synthetic plastics material and a lower or rear preformed sheet of a synthetic plastics material that has on one planar surface a plurality of preformed individual pockets and which on the opposed planar surface is flat. In a still further alternative, the envelope may be formed as an extruded section of a synthetic plastics material, the extrusion consisting of elongated cells or adjacent tubes formed integrally as a one-piece structure, the plastics material preferably being semi-transparent.

The synthetic plastics material of which the envelope is formed is preferably polyvinylchloride (PVC), or copolymer containing vinyl chloride, polyethylene terephthalate (PET) or other similar materials.

The fluid mix may include a second coloured pigment which will preferably be titanium dioxide powder in the rutile form or the anatase form.

In order to form a magnetic display assembly, the panel containing the fluid mix will preferably be housed in a cabinet or casing. The cabinet or casing may be in the form of a simple frame so as to provide a "slate" but more preferably the cabinet or casing will include a base and a top hingedly connected thereto and in which the panel containing the fluid mix is housed, the lid being locatable in an inclined or near horizontal disposition or in a vertical or substantially vertical disposition relative to the base.

Embodiments of the invention will now be described, by way of example, reference being made to the accompanying drawings, in which:—

Figure 1 is a sectional elevation of a magnetic panel according to a first embodiment of the invention;

Figure 2 is a sectional elevation similar to Figure 1, but showing an alternative construction of the magnetic panel according to the invention;

Figure 3 is a sectional elevation showing a further alternative construction of a magnetic panel according to the invention;

Figure 4 shows a sectional elevation of a still further alternative construction of a magnetic panel according to the invention;

Figure 5 is a plan view to a reduced scale of a desk top drawing or display assembly incorporating a magnetic panel according to the invention;

Figure 6 is a side elevation of Figure 1;

Figure 7 is a perspective view of the drawing or display assembly of Figures 5 and 6 taken from the rear of the assembly and showing the lid of the board in the raised position;

Figure 8 is a perspective view from the front of the drawing or display assembly of Figures 1 and 2, also showing the lid in the raised position;

Figure 9 is a sectional elevation taken on line IX—IX of Figure 5;

Figure 10 is a sectional elevation of a magnetic stylus;

Figure 11 shows the forms of shaped magnetic styli forming part of the assembly of the invention; and

Figure 12 is a graph of yield stress against yield strain showing the effect of a pseudo-plastic thickening agent on a dispersing fluid.

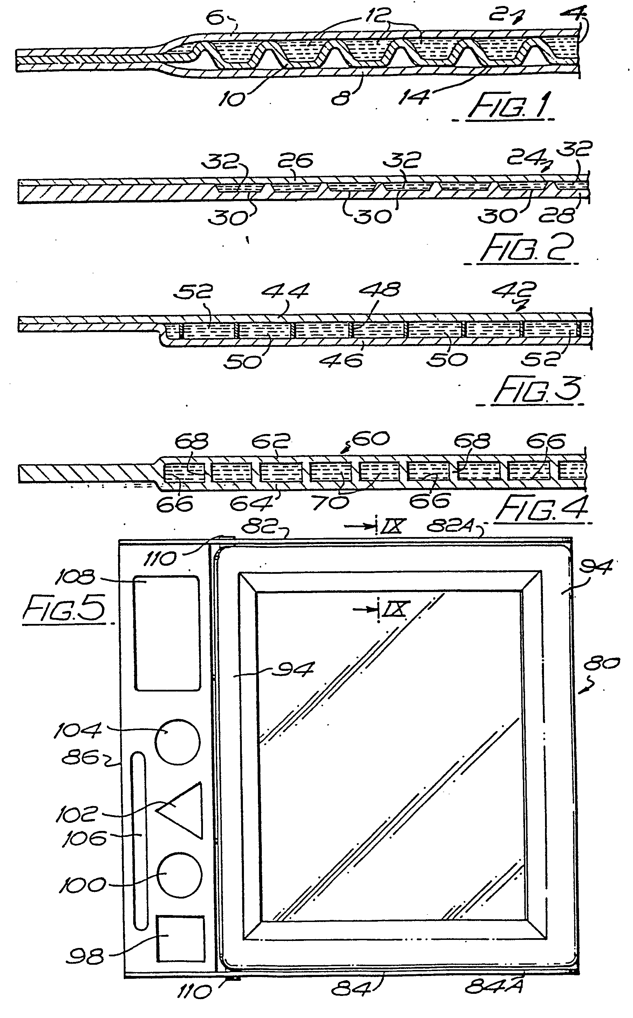

Referring to the drawings, and firstly to Figure 1, a magnetic panel according to the invention and indicated generally by reference numeral 2, comprises an envelope 4 consisting of an upper or front sheet 6 of transparent or translucent synthetic plastics material, a lower or rear sheet 8 of a synthetic plastics material which may be transparent, semi-transparent, translucent or opaque, and an intermediate sheet 10 of a synthetic plastics material which may be transparent or translucent and which is vacuum formed or otherwise moulded to provide a plurality of pockets 12 in which a fluid mix 14, to be later described, is located. The synthetic plastics material of the sheets 6, 8 and 10 is preferably polyvinylchloride (PVC) or copolymer containing vinyl chloride, polyethylene terephthalate (PET) or other similar material. The upper or front sheet 6 is affixed, after the fluid mix 14 has been inserted into the pockets 12, to the intermediate sheet 10 preferably by means of an adhesive, over the whole of the mating surfaces of the sheets 6 and 10 so that the pockets 12 and particularly the individual pockets of fluid, are isolated one from the other. The lower or rear sheet 8, which may also be affixed by means of an adhesive to the lower surface of the intermediate sheet 10, is provided to add rigidity and to afford protection to the intermediate sheet 10, although it will be appreciated that in some instances, particularly where the sheet 10 is sufficiently rigid, the sheet 8 may be omitted. In addition to adhesively affixing the sheets 6, 8, and 10 in the regions of the pockets, the edges of the sheets will be secured together by welding by the use of high frequency welding, ultrasonics or similar processes.

When the sheet 6 is affixed to the intermediate sheet 10, a chamber is formed, the chamber including the pockets 12 in which the fluid mix is located.

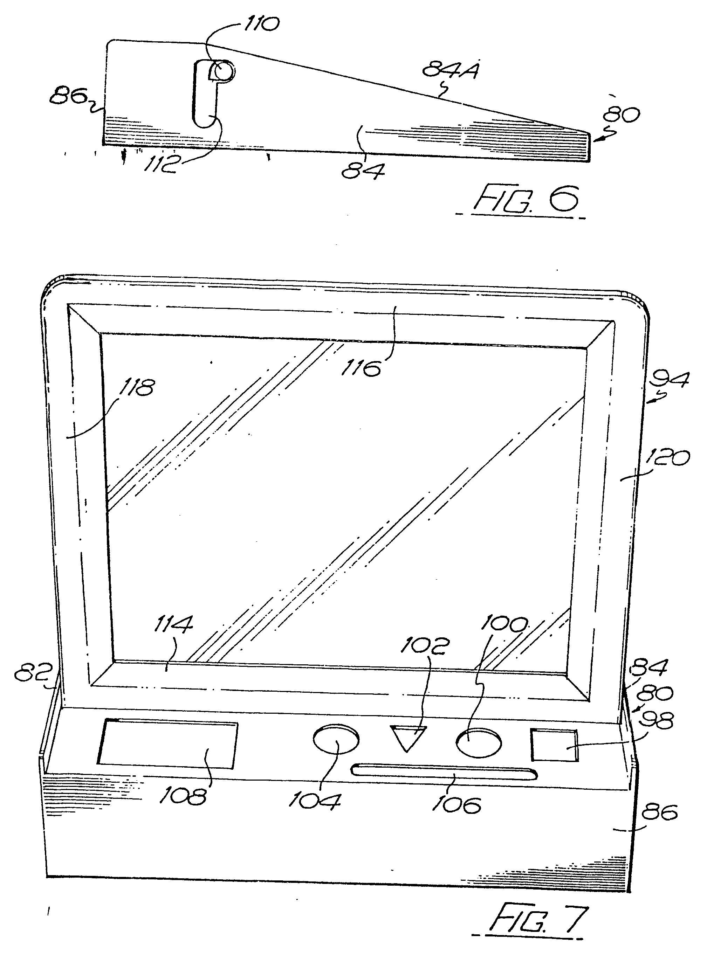

Referring now to Figure 2, which shows an alternative construction of the magnetic panel, the panel indicated generally by reference numeral 24 consists of an upper or front sheet 26 of transparent or translucent synthetic plastics material such as polyvinylchloride (PVC) or copolymer containing vinyl chloride, polyethylene terephthalate (PET) or other similar material, and a lower or rear sheet 28 of a synthetic plastics material preferably the same as the upper or front sheet 26, the lower or rear sheet 28 being vacuum formed to provide on its upper surface (in the drawing) a plurality of pockets 30 — which together define a chamber — in which a fluid mix 32 is located. The lower planar surface of the sheet 28 is flat so as to provide rigidity of the sheet. The sheet 26 is affixed preferably by means of an adhesive, after the fluid mix 32 has been inserted into the pockets 30, to the sheet 28 to effectively seal the pockets 30, and the sheets 26 and 28 are edge-sealed to ensure that the chamber between the sheets is fluid tight.

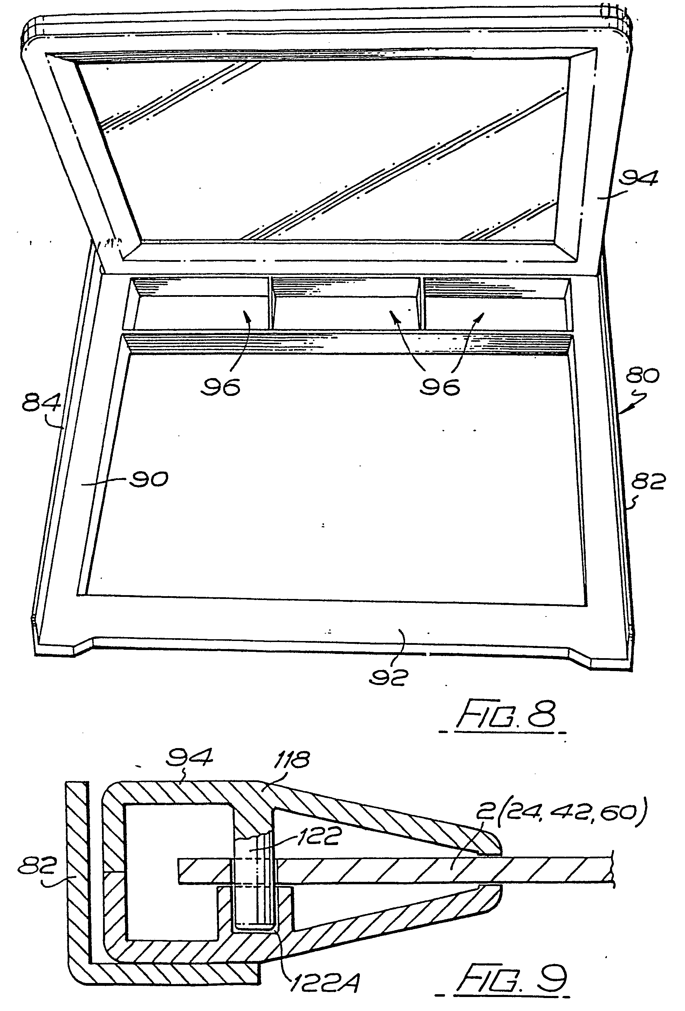

The envelope 42, referring now to Figure 3, consists of an upper or front sheet 44 of a transparent or translucent synthetic plastics material, and a lower or rear sheet 46 of a synthetic plastics material, the sheet 46 being recessed to provide a chamber between the sheets and in which is located a honeycomb core 48 consisting of individual pockets 50 in which the fluid mix 52 is located. The plastics material of the sheets 44 and 46 is preferably the same as the corresponding sheets of the earlier described embodiments, and the honeycomb core 48 will preferably be composed of a synthetic plastics material such as polyvinylchloride (PVC), acetate and polystyrene or similar flow or injection moulding plastics material or a resin impregnated paper.

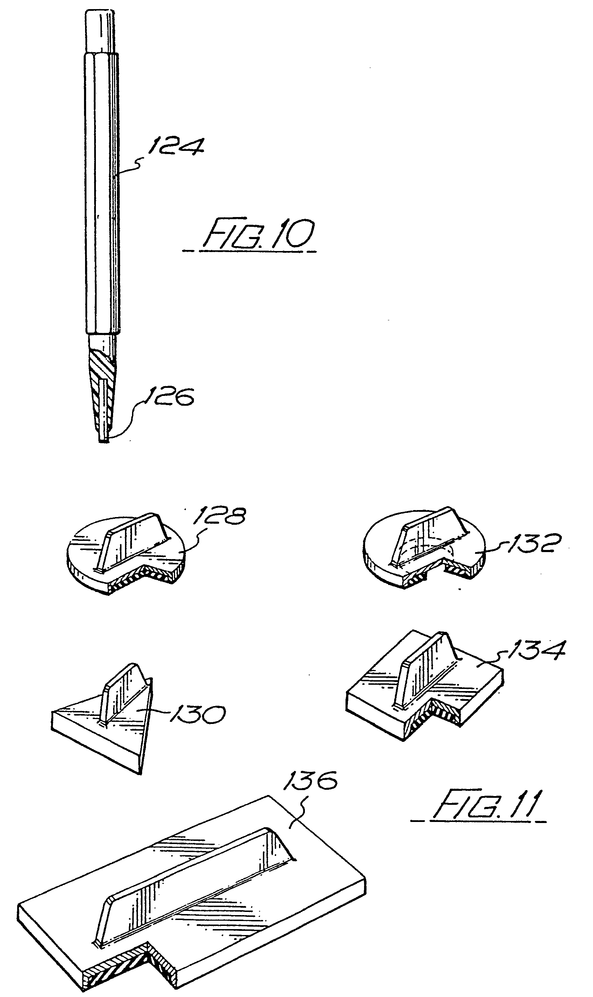

The envelope 60 of Figure 4 consists of a one-piece extruded synthetic plastics material comprising an upper surface 62, and a lower surface 64 between which are located a plurality of elongated cells or adjacent tubes 66 — constituting the chamber — separated by lands or walls 68 of the extrusion, the fluid mix 70 being located in the cells or tubes 66. The open ends of the cells or tubes will be crimped or otherwise sealed to ensure that the panel is fluid tight.

The fluid mix located within the chambers of the several constructions of the envelope will essentially consist of an admixture of a magnetic coloured pigment, a dispersion medium, a surface active dispersing agent, and a micellar-based pseudo-plastic thickening agent. The function of the thickening agent in the device is to counteract the effects of gravity and thermal agitation on the magnetic particles such that they maintain a desired pattern. The thermal agitation forces will tend to scatter or reduce the definition of a pattern which has been pulled to the front of the envelope by a magnetic stylus or the like. A white or second coloured pigment may also be included if desired.

The thickening agent being micellar based, interacts with the dispersion medium to form micelles, the medium exhibiting pseudo-plastic properties; that is, below a certain shear stress, which is called the flow point, the thickening agent holds the magnetic particles in a fixed position, the shear stress value being greater than any gravitational or thermally diffusive force. When the flow point or yield stress is exceeded, in this case by the application of a magnetic field, the micelle will be broken and the magnetic particles will move within the fluid mix, whereafter micelle formation will re-occur.

The graph of Figure 12 which shows yield stress (x-axis) against yield strain (y-axis) shows the effect of a markedly micellar-based pseudo-plastic thickening agent on a dispersion medium. The normal behaviour of the dispersion medium without a thickening agent is shown by the broken line $X$. When the thickening agent is present, application of the shear stress will not move the liquid — A to B on the y-axis. At point $B$, the shear stress value of the flow point is exceeded and flow will occur, $B$ to $C$. When the excess shear stress is removed, then flow will stop, i.e. there will be no shear strain. Such ideal behaviour is known as Bingham Fluid Behaviour, and the intercept on the shear stress axis (y-axis) at point $B$, is the flow point.

In reality it is very difficult to obtain ideal Bingham Fluid behaviour and the graph of shear stress/shear strain is modified to show two parts, $A$ to $B'$ and $B'$ to $C$. The first part, $A$ to $B'$, shows a very high rate of shear stress to unit shear strain. At $B'$ there is a transition to a much lower gradient of shear stress to shear strain. In short, the medium is initially thick and then thins past a certain point. When the shear stress is removed, the fluid will thicken again. Tests have shown that the thickening action resumes almost immediately, i.e. the fluid is pseudo-plastic, whereas if the fluid thinned and took a while to return it would be regarded as thixotropic.

The selection of the particular form of pseudo-plasticiser will depend upon the nature of the dispersion medium used, and below are set out particularised forms of micellar based pseudo-plastic thickening agents based on their compatibility with the selected dispersion medium which is a paraffinic system, a paraffinic/water system, or a water only system.

**0010354**

PARAFFINIC SYSTEMS

Suitable pseudo-plasticisers or thickening agents for use in paraffinic systems are exemplified as:

(i) Carbohydrate Esters

   a) Cellulose Laurate

   b) Starch Laurate

(ii) Aluminium Soaps

   a) Aluminium hydroxy di-carboxylate $C_8$ to $C_{18}$

   b) Aliphatic Carboxylic Acids — soaps of pentanoic, iso-octanoic, 2 ethyl-hexanoic, or caprylic acid

   c) Aromatic Carboxylic Acids — Naphthenoic, or benzoic acid

(iii) Modified Sorbitols and Derivatives

   a) Benzylidene Sorbitol

   b) Benzaldehyde-Sorbitol reaction product and Methanol

(iv) Aromatic Alcohols and Derivatives

   a) Xylitol

(v) Soaps of Alkali and Alkaline Earth Metals (Groups 1 and 2a of the Periodic Table)

   a) Lithium

   b) Sodium

   c) Potassium

   d) Calcium

   e) Magnesium

   f) Barium

   g) Calcium Soaps produced in situ from calcium oxide or calcium hydrozide and carboxylic acid

       } Group 2A (Alkaline Earth)

(vi) Organic Polymers

   a) Acrylic and *tert*-Butylstyrene

   b) Copolymers containing at least 2 monocarboxylic acid groups, at least one 1,2 di-carboxylic acid or acid anhydride, e.g. styrene, ethyl acrylate, maleic anhydride

   c) Carboxylate copolymers used in conjunction with lithium phenolates where polymer is acrylic acid styrene copolymer

   d) Alkene oxide — cyclic acid anhydride, cyclic organo metallic compound (soap)

   e) Butadiene rubber treated with sulphur dioxide in the presence of a lithium nitrate catalyst

   f) Carbon-nitrogen backbone copolymers

6

**0 010 354**

g) Low molecular weight polyethylene

h) Polytetrafluoroethylene (PTFE)

(vii)  Paraffin Hydrocarbons

a) Paraffin with 25 to 35 carbons ($C_{25}/_{35}$ paraffins) — e.g. tricontane

(viii)  Petroleum Sulphonates

a) Sodium petroleum sulphonate

b) Potassium petroleum sulphonate

(ix)  Two Component Systems

a) Alkoxide compounds of Group 1 metal e.g. lithium and alkoxide of Group 3a metal e.g. aluminium

b) Alkali metal alkoxide or alkali metal salt of glycerol ether and trialkyl borate and a dehydrating agent to increase resistance to hydrolysis

c) Aluminium oleyl orthophosphate and an amine e.g. piperazine, of which one must be long chain

d) Iron dialkyl orthophosphate (1 long chain, e.g. oleyl hydrogen orthophosphate) and magnetic iron oxide ($Fe_3 O_4$)

e) Toluene diisocyanate and a $C_{12}/C_{20}$ $\beta$-amine

f) Polyureas formed in situ from a monoamine a diamine and a diisocyanate

g) Alkali metal hydroxide or an organic base, e.g. triethylenetetramino, TEPA or aminoethanol and a carboxylic acid with with at least 1 long alkyl chain ($C_{12}$ to $C_{20}$)

(x)  Single Synthetic Organic Compounds

a) Pyrrolidinone — 2 — carboxamide

$$O = \left\langle \begin{array}{c} \\ \underset{\underset{H}{|}}{N} \end{array} \right\rangle CON\ R^1\ R^2$$

$$R^1\ R^2 = \left.\begin{array}{l} \text{hydrogen or} \\ \text{alkyl} \\ \text{aryl} \\ \text{aralkyl} \\ \text{cycloalkyl} \end{array}\right\} C_1\ \text{to}\ C_{30}$$

b) 1-alkyl derivatives of 1-propyl-2-amino propionic acid or 1-isobutyl-2-amino propionic acid, where the alkyl derivative

c) is a $C_8$ to $c_{16}$ alkyl group

c) Triureas

PARAFFIN/WATER SYSTEMS

Pseudo-plasticisers or thickening agents suitable for use in paraffin/water systems are exemplified as:

(i)  Non-ionic Surfactants

a) Tri (hydroxyethyl) amine

b) Di (hydroxyethyl) amine

7

**0010 354**

c) N, N$^1$-dihydroxyethyl alkylamide

d)
$$R\text{—}CO_2\text{—}CH_2\ CH_2\ N\ (CH_2\ CH_2\ OH)_2:$$
$$R\ CON\ (CH_2\ CH_2\ OH)_2:$$
$$HN\ (CH_2\ CH_2\ OH)_2:$$
$$N\ (CH_2\ CH_2\ OH)_2:$$

R (alkyl) group is $C_5$ to $C_{20}$

e) Poly (oxyethylene) cetyl ether

f) Poly (oxyethylene) cetyl stearyl ether

(ii)   Amine and Carbon Dioxide

a) Benzylamine and $CO_2$

(iii)   Esters, Amides or Amine Salts of N-Acylamino Acids

a) N, N-dioctadecyl-2-dodecaramidopentarediamide

(iv)   Aliphatic Polyhydric Alcohols and an Alkanolamine Salt of Phosphate Esters of Ethoxylated Aliphatic Alcohol

a) Ethylene glycol +
Phosphoric acid ester (80% $C_{10}$ to $C_{12}$ alcohol) triethanolamine salt

(v)   Amides and Amines Derived from Fatty Acids

a) Palmitic acid +
Diethanolamide +
Diethanolamine

(vi)   Vegetable Products

a) Albumenoids

b) Saponin

c) Resinous gums plus a cobalt soap

WATER ONLY SYSTEMS
Thickening agents having the required degree of pseudo-plasticity for use in water only systems are exemplified as:

(i)   Diisoproponalamine Oleate and Ammonia

(ii)   Cyclic Carboxylic Acid Monoglyceride

(iii)   Sorbitol or Glucose and Benzaldehyde (Product of reacting 1:1 mole ratio at pH = 1 and 25°C for 5 hours

(iv)   Water Soluble Polymers and Alkali Metal Soaps

a) Polyvinyl alcohol and sodium stearate

b) Stearate soap, stearic acid and a polyhydric alcohol such as Sorbitol or propylene glycol

(v)   Reduction of chromic irons by thisulphate to chromium III (CIII) and a polymer or carboxymethyl hydroxyethyl cellulose

All of the above micellar-based pseudo-plastic thickening agents are merely examples of such agents for use in the various base systems, it being understood that other micellar-based pseudo-plastic thickening agents may be used. The prime requirement of the thickening agent is that the resulting mix should display Bingham behaviour, or pseudo-plasticity or shear thinning above a critical

8

shear yield stress, so that when the thickening agent is incorporated into the fluid mix in a predetermined amount, the magnetic particles will be capable of being drawn upwardly through the fluid mix to form the display and will remain in their drawn up, display position until required to be moved away. The thickening agents of the present invention do not in any way rely on solid/liquid interface interaction to produce the required gelation effect as is the case with solid fine grain thickeners, but rely solely on the formation of the micelles when the thickening agent is in solution or other means.

The micelle-based thickening agents, whose molecules can exist separately, are organic compounds which interact with the dispersion medium through having two groups composing its structure, one group being compatible with the dispersion medium and the other group not being such. The molecules of the thickening agents will be of the same order of molecular weight as the molecules of the dispersion medium, and will form a micelle which is a loose assembly of molecules in an ordered manner with a low energy of interaction holding the assembly together. The micelle molecules will be in a slow exchange with "loose" thickening agent molecules in the solution. The interaction is a weak inter-molecular force which is non-specific, and the result is a lamellae type structure which is readily broken — as for example by the passing through of solid particles — but which is readily recoverable, albeit in a different micelle formation.

The white pigment incorporated into the fluid mix according to a preferred embodiment of the invention will be titanium dioxide powder, either in the rutile form or the anatase form, and will be incorporated as HOMBITAN R—511 (R.T.M.). manufactured by Sachtleben, which is of very low toxicity and which therefore may safely be incorporated in the panel of the invention.

The magnetic pigment of the fluid mix will, in said preferred embodiment, be black and will be finely divided iron powder, that is iron powder produced by the decomposition of iron carbonyl, with a particle distribution size of 4 to 7 for 98% of the powder, the iron powder having low toxicity.

The dispersion medium of the preferred embodiment will be Isopar M, a clear paraffinic liquid mainly composed of isoforms of the paraffin series.

The surface-active dispersing agent (wetting agent) will be a high molecular weight unsaturated organic acid ester neutralised with a long chain polyamine-amide, which has very low toxicity. The agent will be Anti-Terra-U.

With the above constituents, the preferred micellar-based pseudo-plastic thickening agent is aluminium hydroxy di-carboxylic acid, the carboxylic acid being in the $C_8$ to $C_{18}$ range, mainly with the higher molecular weight. This thickening agent also has very low toxicity.

Examples of fluid mixes located in the envelope of the drawing or display board assembly will now be given below, beginning with the preferred constituents set forth above.

## Example 1

| | |
|---|---|
| *A preparation of aluminium hydroxy dicarboxylic acid* | 9.00% by weight |
| *Isopar M* | 78.65% by weight |
| *Anti-Terra-U* | 1.12% by weight |
| *Titanium Dioxide* | 2.25% by weight |
| *Iron Powder* | 9.98% by weight |

The iron powder is Electronic Oxide 20

The above preparation is Gel 68 (Trade Mark).

The incorporation into the mix of 1.12% wetting agent, Anti-Terra-U, obviated the need for mixing in a micronizing mill. The incorporation into the mix of the Gel 68 as the thickening agent produces a mix by formation of micelles, and therefore no reliance is placed on solid/liquid interface interaction.

The fluid mix adequately enabled the iron particles to be pulled up and down to form or remove the display — as will be later explained — and the suspension of iron particles was found to be good. The contrast between the titanium dioxide and the iron powder, i.e. the white/black contrast was found to be excellent, enabling a sharply contrasting display to be formed.

## Example 2

| | | |
|---|---|---|
| *Stock Mix:* | | 5.94% by weight |
| Isopar M | 66.44% by weight | |
| Titanium Dioxide | 33.22% by weight | |
| Strodex P—100 | 0.33% by weight | |
| *Isopar M* | | 76.95% by weight |
| *Aerosil 200* | | 1.14% by weight |
| *Iron Powder* | | 15.78% by weight |
| *(Strodex P—100* (Wetting agent) | | 0.19% by weight |

The iron powder is GAF Type E

It was found with the above mix that the iron particles pulled up and down satisfactorily and remain suspended when in the pulled up position to form a display. It was however found that the black/white contrast was not as good as in Example 1.

## Example 3

| | | |
|---|---|---|
| Bentone Gel Mix: | | 9.10% by weight |
| Isopar M | 86.5% by weight | |
| Bentone 38 | 10.0% by weight | |
| Propylene Carbonate | 3.5% by weight | |
| Stock Mix: | | 5.45% by weight |
| Isopar M | 66.44% by weight | |
| Titanium Dioxide | 33.22% by weight | |
| Strodex P 100 | 0.34% by weight | |
| *Isopar M* | | 70.90% by weight |
| *Iron Powder* | | 14.55% by weight |

The iron powder is GAF Type E

With the above mix, it was found that the dispersion was good and that the particles pulled up and down satisfactorily. The suspension of the iron particles was found to be good, but some deterioration in the powers of suspension was observed. The contrast (black/white) was found to be satisfactory.

## Example 4

| | |
|---|---|
| Bentone Gel Mix | |
| Isopar M | 86.5% by weight |
| Bentone 38 | 10.0% by weight |
| Propylene Carbonate | 3.5% by weight |

Modification to Bentone Gel

| | | |
|---|---|---|
| Bentone Gel Mix | 95.24% by weight | |
| Anti-Terra-U | | 4.76% by weight |

Stock Mix

| | | |
|---|---|---|
| Isopar M | 56.95% by weight | |
| Titanium Dioxide | 42.71% by weight | |
| Strodex P 100 | | 0.34% by weight |

Complete Mix

| | | |
|---|---|---|
| *Isopar M* | | 60.46% by weight |
| *Modified Bentone Gel* | 19.38% by weight | |
| *Stock Mix* | | 4.66% by weight |
| *Iron Powder* | | 15.50% by weight |

The iron powder is GAF Type E

In the above mix, the addition of 4.76% by weight of Anti-Terra-U to 95.24% by weight of the Bentone Gel Mix of Example 3, and variations in the amounts of the constituents making up the stock mix together with reductions of the amounts of the stock mix and Isopar M and an increased proportion of iron powder, resulted in an all round improvement to the mix. With the mix of Example 4, the dispersion was found to be good as was the suspension of the iron particles in the mix. The black/white contrast was found to be good, and the mix was age tested and found to be very satisfactory for storage purposes.

Example 5

| | | |
|---|---|---|
| *Isopar M* | 25 grams | 66.66% by weight |
| *Empilan CDE* | 2.5 grams | 6.66% by weight |
| *Emplan KA2* | 1.0 grams | 2.66% by weight |
| *Nansa YS94* | 3.5 grams | 9.33% by weight |
| *Titanium Dioxide* | 1.0 grams | 2.66% by weight |
| *Iron Powder* | 4.0 grams | 10.66% by weight |
| *Water* | 0.5 grams | 1.33% by weight |

Empilan CDE and Empilan KA2 are surfactants manufactured by Albright & Wilson Limited and Nansa YS94 is an alkyl substituted ammonium salt of a sulphonated alkylbenzene.

The above gives a fluid mix in which the particles pull up and down, and which the suspension of the particles is good. The contrast (black/white) is good, as is the dispersion.

The above are given only as examples to show acceptable and workable fluid mixes, and it will be appreciated that there are many other fluid mixes incorporating an organic micellar-based pseudo-plastic thickening agent which will work equally well.

Heat cycling tests carried out on the fluids, the cycling tests ranging from below 0°C to 43°C with cycle times being 10 hours hot followed by 14 hours cold daily for a period of three weeks, showed that at 43°C the formed display had loss of contrast and dropout of the magnetic particles, but at 35°C there was no adverse effect on the fluid mix or on the formed display. At 0°C the fluid mixes were found to be satisfactory, although they did have a slightly longer reaction time.

When the fluid mix (as selected) has been prepared, the pockets of the envelope are filled with the mix whereafter the envelope is sealed so as to seal the fluid mix within said pockets and the edges of the sheets are also sealed as previously mentioned.

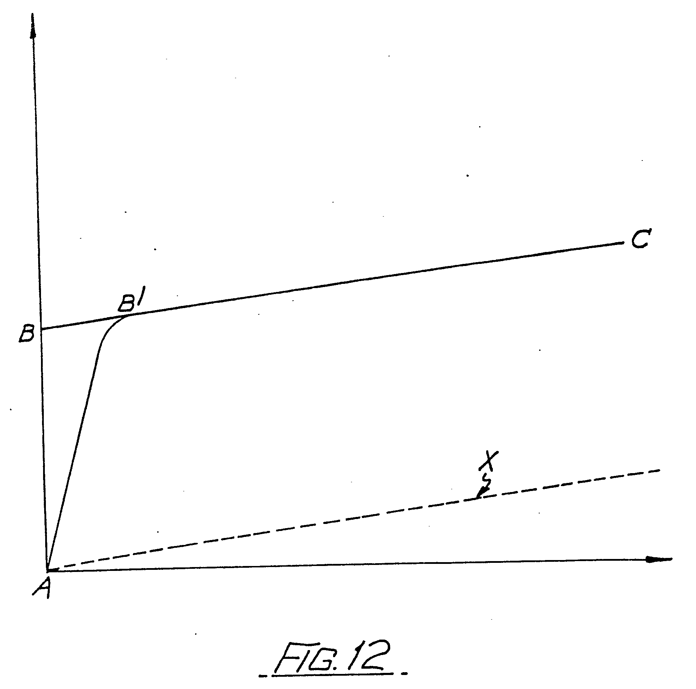

The completed envelope, according to any of the embodiments described, containing the fluid mix, may be used in that form with a co-operating magnetic stylus or other magnet, or the envelope may be incorporated in a magnetic drawing or display assembly. Such an assembly is shown in Figures 5 to 9.

Referring to those Figures, which show a desk top drawing or display assembly, the assembly is indicated generally by reference numeral 80.

The drawing or display assembly 80 comprises a cabinet or casing consisting of side walls 82, 84 each including a respective inclined portion 82A and 84A, and a rear wall 86. As will be seen, the side walls 82, 84 each have a member 88, 90 respectively which are connected together by a cross member 92, the members 88, 90 and 92 serving to support a top 94 when the latter is in its lowered position as shown in Figures 5 and 6. The cabinet or casing includes receptacles 96 for the housing of writing or drawing instruments (not shown) and also includes shaped recesses 98, 100, 102 and 104 for receiving correspondingly shaped magnetic drawing shapes (see Figure 11) as well as a recess for a drawing instrument such as a magnetic stylus (see Figure 10), and a recess 108 in which a magnetic eraser (not shown) may be located.

The cabinet or casing is preferably composed of a synthetic plastics material such as polystyrene or polypropylene or the like and will preferably be formed by an injection moulding process, and will in its finished form be sufficiently rigid so as to be able to support the top 94.

The top 94 is hingedly secured to the cabinet or casing of the drawing or display assembly 80 by means of dowels 110 or the like which locate in inverted L-shaped slots 112 in the side walls 82, 84 of the cabinet or casing, the arrangement being that to retain the top 94 in the raised position shown in Figures 7 and 8, the top 94 is lifted and pivoted about the dowels 110 with the result that the dowels 110 move rearwardly and downwardly into the elongate portions of the slots 112 in which position the top 94 is located in the slots 112 to the rear of the receptacles 96 such that the top 94 is maintained in the raised position. To lower the top 94 it is first moved vertically upwards and then forwards until the dowels 110 engage the shorter portions of the slots 112, whereafter the top 94 may be lowered to the position shown in Figures 5 and 6 where it is supported by the members 88 and 90 of the said walls 82 and 84.

The top 94 of the drawing or display assembly is generally rectangular in configuration and is in two identical halves, each being in the form of a frame comprising a rear wall 114, a front wall 116 and a side walls 118 and 120. Each half of the top 94 is formed of a synthetic plastics material such as polystyrene or polypropylene or the like, and will preferably be formed by an injection moulding process. It will be seen that the frame-like top 94 has the inner faces of the walls 114, 116, 118 and 120 inclined to define an opening in which the magnetic panel is located, the panel being secured in position between the two halves of the top 94 by suitable means such as dowel pins 122 engaging in recesses 122A, so as to trap the envelope along its edge regions (see Figure 9). The engagement of the dowel pins 122 in the recesses 122A, also serve to secure the two halves of the top 94 together, dowel pins and holes being suitably located around the entire periphery of the top.

To produce a design or display on the magnetic panel of the drawing or display assembly, a magnetic stylus is moved in contact with and over the upper surface of the upper or front sheet of the envelope. This has the effect of pulling upwardly the magnetic particles in the fluid mix, in those regions over which the stylus has passed towards the lower surface of the upper or front sheet of the panel, so that black lines or designs will appear in a white background.

The reverse, i.e. white lines on a black background, may be achieved in an opposite manner to the above, by firstly pulling the magnetic particles to the underside of the front sheet of the envelope, and then applying the magnetic stylus to the rear sheet of the envelope so as to pull downwardly those magnetic particles acted upon by the stylus.

Similarly, black lines or displays in a white background, or white lines in a black background can be produced by moving the magnetic stylus over and in contact with the lower or rear sheet of synthetic plastics material, the lines or displays being visible through the upper or front sheet of the panel.

The magnetic stylus may take the form of a magnetic pen or pencil such as is indicated by reference numeral 124, the pen or pencil including a magnet 126, or the magnetic stylus may be of predetermined shapes such as are indicated by reference numeral 128, 130, 132, 134 in Figure 11, these shapes corresponding to the shaped recesses 98, 100, 102 and 104 in which case the shaped "styli" may be used to produce shaped displays in the drawing or display assembly. The shaped styli will preferably be multi-pole or striped magnets and will incorporate a handle or other holding means to enable the styli to be easily and conveniently moved in contact with upper or front sheet, or the lower or rear sheet of the magnetic panel. The shaped styli may be locatable in the correspondingly shaped recesses of the drawing or display assembly when not in use, or they may be located in the receptacles 96.

Lines or displays on the drawing or display assembly may be produced with the top 94 in the position shown in Figure 5 or in the position shown in Figures 7 and 8.

Erasure of the lines or displays from the drawing or display assembly is achieved by passing a magnetic stylus along the opposite side of the envelope from which the lines or displays were formed.

Thus, if the lines or displays are formed by moving a magnetic stylus over and in contact with the upper or front sheet of the envelope then erasure will be achieved by passing the same magnetic stylus or an erasing magnet 136 (Figure 11) corresponding in shape to the recess 108 of the cabinet or casing 80 over and in contact with the lower or rear sheet of the envelope so as to pull the magnetic particles downwardly towards said rear or lower sheet.

Movement of the stylus or other magnet to produce or erase a display from the panel causes the magnetic particles to move through the fluid mix in the envelope, the movement of the magnetic particles being achieved by breaking down the micelle formations in the micelle-based fluid mix, such breakdown being due to the shear stress applied to the micelle formation by the magnetic particles when the magnetic force acts on the magnetic particles. When the magnetic particles have been so moved, they are maintained in their new positions by the micelle re-forming, the magnetic particles remaining in those positions until a magnetic force is again applied.

It will be appreciated that many modifications may be made to the drawing or display assembly according to the invention. For example, the assembly need not be formed to the shape shown in the drawings. Indeed, it need not be formed as a desk top drawing or display board, or the desk top drawing or display board may be mounted on fixed or foldable legs so that it may be free standing. In addition, a drawing or display assembly according to the invention may be formed as a "slate" of varying sizes so that it may be used for various purposes such as a pocket notebook, a games scoring board, or as a blackboard for use in schools and colleges and other educational and like establishments.

As regards the magnetic panel itself, the pigments need not be black and white, in that they could be of other colours such as red/white, yellow/black and so on in which case appropriate dyes must be used. In addition, a multi-coloured magnetic panel incorporating more than two contrasting colours may be formed. In such an instance, the coloured magnetic particles would be of differing magnetic moment and/or size, and movement of the magnetic particles would involve the use of magnetic styli of differing strengths. Those magnetic particles having the least magnetic moment and/or size would be moved first with the magnetic stylus having the least magnetic strength, followed by those magnetic particles having the second least magnetic moment and/or size (by means of the magnetic stylus having the second least magnetic strength) and so on, until all the differently coloured particles have been moved by their respective stylus.

Finally, it will be appreciated that as the fluid mixes in the magnetic panel of the present invention do not use inorganic ground solid powders as the thickening agent, but rather makes use of organic pseudo-plasticisers or thickening agents then there is no solid/liquid interface interaction, the invention relying on the formation of micelles, the difference between the solid/liquid interface interaction, i.e. dispersion of a solid in a liquid, and dispersion of a micelle in a liquid, being fundamental. In addition, there is no necessity to mix the dispersion medium and the pseudo-plasticiser or thickening agent in a micronizing mill, since, if necessary, use is made of a wetting agent to achieve the desired result.

The essential and fundamental differences between the thickening agents previously proposed and those proposed by the present invention, are that those proposed by the invention are organic, they are used at their molecular levels and at the same or substantially the same molecular level as the dispersion medium, and rely on the formation of micelles. This results in weak interaction but the interactions are many-fold.

## Claims

1. A magnetic panel comprising an edge-sealed envelope formed of a front transparent or translucent sheet of a non-magnetic material and a rear sheet of a non-magnetic material, said sheets being spaced apart so as to provide a chamber therebetween, said chamber including a plurality of pockets and a fluid mix located in said chamber, said fluid mix consisting of a surface active dispersing agent, a micellar-based pseudo-plastic thickening agent, a magnetic coloured pigment including magnetic particles of finely divided iron powder or iron oxide, a dispersion medium being a paraffin system, a water only system or a paraffinic/water system, characterised by said surface active dispersing agent being a high molecular weight unsaturated organic acid ester neutralised with a long chain polyamine-amide.

2. A magnetic panel according to Claim 1, wherein the micellar-based pseudo-plastic thickening agent is selected from carbohydrate esters; aluminium soaps; modified sorbitols and their derivatives; aromatic alcohols and their derivatives; soaps of alkali and alkaline earth metals (groups 1 and 2a of the Periodic Table); organic polymers; paraffin hydrocarbons; petroleum sulphonates; non-ionic surfactants; amine and carbon dioxide; esters, amides or amine salts of N-acylamino acids; aliphatic polyhydric alcohols and an alkanolamine salt of phosphate esters of ethoxylated aliphatic alcohols; amides and amines derived from fatty acids;diisopropanolamine oleate and ammonia; cyclic carboxylic acid monoglyceride; sorbitol or glucose benzaldehyde; stearate soap and a polhydric alcohol; stearic acid and polyhydric alcohol; reduction of chromium (iii) ions by thiosulphate to chromium (ii) ions and a polymer.

3. A magnetic panel according to Claim 1 or Claim 2, wherein said fluid mix includes a second coloured pigment consisting of titanium dioxide powder in the rutile form or the anatase form.

4. A magnetic panel according to any of Claims 1 to 3, wherein said pockets are formed in an intermediate sheet of synthetic plastics material located between the front sheet and the rear sheet of the envelope, said front sheet being adhesively secured to said intermediate sheet so as to isolate from each other the pockets of said intermediate sheet.

5. A magnetic panel according to any of Claims 1 to 3, wherein said pockets are formed in the rear sheet of said envelope, the front sheet and the rear sheet being adhesively secured together so as to isolate from each other the pockets of said rear sheet.

6. A magnetic panel according to any of Claims 1 to 3, wherein a honeycomb core is located between the front sheet and the rear sheet of the envelope, said honeycomb core consisting of individual pockets, the front sheet and the rear sheet being adhesively secured to opposed sides of the honeycomb core so as to isolate from each other the pockets of said honeycomb core.

7. A magnetic panel according to Claim 6, wherein said honeycomb core is composed of a synthetic plastics material or a resin impregnated paper.

8. A magnetic panel according to any of Claims 1 to 3, wherein said front sheet and said rear sheet are formed integrally as a one-piece structure having a plurality of elongated cells or tubes therein, said cells or tubes being separated by lands or walls of said structure.

9. A magnetic display device including a magnetic panel according to any of Claims 1 to 8, and further including a magnetic stylus for causing the magnetic particles to move within the fluid mix to form a display on said panel.

10. A magnetic display assembly including a magnetic display device according to Claim 9, said assembly including a top in which said magnetic panel is located, said top consisting of two identical halves which are secured together by co-operating dowel pins and recesses formed on said two halves, the panel being retained in position relative to said top by said dowel pins.

11. A magnetic display assembly according to Claim 10, including a base to which said top is hingedly connected so as to enable the top to be moved relative to said base and to be locatable in a horizontal or substantially horizontal, or vertical or substantially vertical disposition relative to said base.

12. A magnetic display assembly according to Claim 11, wherein the base of said assembly includes integral means to support the top in the horizontal or substantially horizontal, or vertical or substantially vertical dispositions.

13. A magnetic display assembly comprising a base and a top hingedly connected thereto, said top including a magnetic panel comprising an edge-sealed envelope formed of a front transparent or translucent sheet of a non-magnetic material and a rear sheet of non-magnetic material, said sheets being spaced apart so as to provide a chamber therebetween, said chamber including a plurality of pockets and a fluid mix located in said chamber, said fluid mix consisting of a magnetic coloured pigment, a dispersion medium, a surface active dispersing agent and a thickening agent, said magnetic coloured pigment being in the form of magnetic particles of finely divided iron powder or iron oxide, said dispersion medium being a paraffin system, a water only system or a paraffinic/water system, said surface active dispersing agent being a high molecular weight unsaturated organic acid ester neutralised with a long chain polyamine-amide, and said thickening agent being a micellar-based pseudo-plastic thickening agent, said assembly including a magnetic stylus for causing the magnetic particles to move within the fluid mix to form a display on said panel.

**Revendications**

1. Tableau magnétique composé d'une enveloppe à bords scellés formée d'une feuille transparente ou translucide en matériau non-magnétique et d'une feuille arrière en matériau non-magnétique, lesdites feuilles étant espacées l'une de l'autre de manière à former entre elles une enceinte, ladite enceinte comportant une pluralité de poches et un mélange fluide étant placé dans l'enceinte, ledit mélange fluide consistant en un agent de dispersion tensio-actif, en un agent d'épaississement pseudo-plastique à base micellaire, en un pigment magnétique coloré comportant des particules magnétiques de poudre de fer ou d'oxyde de fer finement divisé, un milieu de dispersion étant un système paraffinique, un système uniquement aqueux ou un système paraffinique/aqueux, caractérisé en ce que ledit agent de dispersion tensio-actif est un ester d'un acide organique non saturé à poids moléculaire élevé neutralisé avec un polyamine-amide à longue chaîne.

2. Tableau magnétique selon la revendication 1, dans lequel l'agent d'épaississement pseudo-plastique à base micellaire est choisi parmi les esters d'hydrate de carbone; les savons d'aluminium; les sorbitols modifiés et leurs dérivés; les savons de métaux alcalin ou alcalino-terreux (groupe 1 et 2a de la Table Périodique); les polymères organiques; les hydrocarbures paraffiniques; les sulfonates de pétrole; les surfactants non ioniques, les bioxydes aminés et de carbone; les esters, amides ou sels aminés de N-acylamino-acides; les alcools polyhydriques aliphatiques et un sel alkanolamine d'esters de phosphate d'alcools alipatiques ethoxylés; les amides et amines dérivées d'acides gras; l'oléate diisopropanolamine et l'ammoniac; le monoglycéride d'acide carboxylique cyclique; le benzaldéhyde de sorbitol ou de glucose; le savon de stéarate et un alcool polyhydrique; l'acide stéarique et l'alcool polyhydrique; une réduction d'ions (iii) chrome par du thio-sulfate en ions (ii) chrome et un polymère.

3. Tableau magnétique selon la revendication 1 ou 2, dans lequel ledit mélange fluide comporte un deuxième pigment coloré composé de poudre de bioxyde de titane sous forme rutile ou sous forme anatase.

4. Tableau magnétique selon l'une des revendications 1 à 3, dans lequel lesdites poches sont formées dans une feuille intermédiaire en matériau plastique synthétique placée entre la feuille avant et les feuilles arrière de l'enveloppe, ladite feuille avant étant fixée par collage sur la feuille intermédiaire de manière à isoler les unes des autres les poches de ladite feuille intermédaire.

5. Tableau magnétique selon l'une des revendications 1 à 3, dans lequel les poches sont formées dans la feuille arrière de ladite enveloppe, la feuille avant et la feuille arrière étant fixées par collage l'une à l'autre de manière à isoler les unes des autres les poches de ladite feuille arrière.

6. Panneau magnétique selon l'une des revendications 1 à 3, dans lequel une âme alvéolée est placée entre la feuille avant et la feuille arrière de l'enveloppe, ladite âme alvéolée se composant de poches individuelles, la feuille avant et la feuille arrière étant fixées par collage sur les faces opposées de l'âme alvéolée, de manière à isoler les unes des autres les poches de ladite âme alvéolée.

7. Tableau magnétique selon la revendication 6, dans lequel ladite âme alvéolée est faite d'un matériau plastique synthétique ou d'un papier imprégné de résine.

8. Tableau magnétique selon l'une des revendications 1 à 3, dans lequel ladite feuille avant et ladite feuille arrière sont formées intégralement en une structure d'une seule pièce comportant intérieurement une pluralité de cellules allongées ou tubes, lesdites cellules ou tubes étant séparés par des cloisons ou parois de cette structure.

9. Dispositif d'affichage magnétique, comprenant un tableau magnétique selon l'une des revendications 1 à 8, et comportant, de plus, un style magnétique pour faire déplacer les particules magnétiques dans le mélange fluide pour former un affichage sur le tableau.

10. Unité d'affichage magnétique, comprenant un dispositif d'affichage magnétique selon la revendication 9, ladite unité comportant un couvercle dans lequel est placé ledit tableau magnétique, ledit couvercle se composant de deux moitiés identiques qui sont fixées l'une à l'autre par des goupilles coopérant avec des évidements formés sur les dites deux moitiés, le tableau étant maintenu en position par rapport audit couvercle au moyen desdites goupilles.

11. Unité d'affichage magnétique selon la revendication 10, comprenant une base sur laquelle ledit couvercle est articulé, de manière à permettre que le couvercle soit déplacé par rapport à ladite base et placé en position horizontale ou sensiblement horizontale, ou en position verticale ou sensiblement verticale, par rapport à ladite base.

12. Unité d'affichage magnétique selon la revendication 11, dans laquelle la base de ladite unité camporte des moyens intégrés pour supporter le couvercle en position horizontale ou sensiblement horizontale, ou en position verticale ou sensiblement verticale.

13. Unité d'affichage magnétique comprenant une base et un couvercle articulé sur elle, ledit couvercle comportant un tableau magnétique composé d'une enveloppe à bords scellés, formée d'une feuille avant transparente ou translucide en matériau non-magnétique et d'une feuille arrière en matériau non-magnétique, les dites feuilles étant espacées l'une de l'autre de manière à former entre elles une enceinte, ladite enceinte comportant une pluralité de poches et un mélange fluide étant placé dans ladite enceinte, ledit mélange fluide consistant en un pigment magnétique coloré, un milieu de dispersion, un agent de dispersion tensio-actif et un agent d'épaississement, ledit pigment magnétique coloré étant sous la forme de particules magnétiques de poudre de fer ou d'oxyde de fer finement divisé, et ledit milieu de dispersion étant un système paraffinique, un système uniquement aqueux ou un système paraffinique/aqueux, ledit agent de dispersion tensio-actif étant un ester acide organique non-saturé de poids moléculaire élevé neutralisé avec un polyamine-amide à longue chaîne, et ledit agent d'épaississement étant un agent d'épaississement pseudo-plastique à base micellaire, ladite unité comportant un style magnétique pour faire déplacer les particules magnétiques dans le mélange fluide pour former un affichage sur ledit tableau.

**Patentansprüche**

I. Magnetplatte, umfassend eine kanten-versiegelte Umhüllung, die aus einer transparenten oder transluzenten Frontplatte aus einem nichtmagnetischen Material und einer hinteren Platte aus einem nichtmagnetischen Material gebildet wird, wobei die Platten so im Abstand voneinander angeordnet sind, daß zwischen ihnen eine Kammer bereitgestellt wird, die Kammer eine Vielzahl von Behältern und ein fluides Gemisch, das in der Kammer lokalisiert ist, umfaßt, das fluide Gemisch aus einem oberflächenaktiven Dispergierungsmittel, einem auf Mizellen basierenden pseudoplastischen Verdickungsmittel, einem magnetischen farbigen Pigment, umfassend magnetische Partikel aus fein zerteiltem Eisenpulver oder Eisenoxid, einem Dispersionsmedium, das ein Paraffinsystem, ein Nur-Wasser-System oder ein Paraffin/Wasser-System ist, besteht, dadurch gekennzeichnet, daß das oberflächenaktive Dispergierungsmittel ein ein hohes Molekulargewicht aufweisender Ester einer ungesättigten organischen Säure ist, der mit einem langkettigen Polyamin-amid neutralisiert ist.

2. Magnetplatte nach Anspruch 1, dadurch gekennzeichnet, daß das auf Mizellen basierende pseudoplastische Verdickungsmittel ausgewählt ist aus Kohlehydratestern, Aluminiumseifen, modizfizierten Sorbiten und deren Derivaten, aromatischen Alkohlen und deren Derivaten, Seifen von Alkali- und Erdalkalimetallen (Gruppe 1 und 2a des periodischen Systems), organischen Polymeren, Paraffinkohlenwasserstoffen, Rohölsulfonaten, nichtionischen oberflächenaktiven Mitteln, Amin und Kohlendioxid, Estern, Amiden oder Aminsalzen von N-Acylaminosäuren, aliphatischen mehrwertigen Alkoholen und einem Akanolaminsalz von Phosphatestern von ethoxylierten aliphatischen Alkoholen, Amiden und Aminen, die von Fettsäuren abgeleitet sind, Diisopropanolaminoleat und Ammoniak, zyklischem Carbonsäuremonoglycerid, Sorbit oder Glucosebenzaldehyd, Stearatseife und einem mehrwertigen Alkohol, Stearinsäure und mehrwertigem Alkohol, Reduktion von Chrom-III-ionen durch Thiosulfat zu Chrom-II-ionen und einem Polymer.

3. Magnetplatte nach Anspruch 1 oder 2, dadurch gekennzeichnet, daß das fluide Gemisch ein zweites farbiges Pigment umfaßt, das aus Titandioxidpulver in der Rutil-Form oder der Anatas-Form besteht.

4. Magnetplatte nach einem der Ansprüche 1—3, dadurch gekennzeichnet, daß die Behälter in einer Zwischenplatte aus synthetischem Plastikmaterial, die zwischen der Frontplatte und der hinteren Platte der Umhüllung angeordnet ist, gebildet werden, wobei die Frontplatte adhäsiv so an der Zwischenplatte befestigt ist, daß die Behälter der Zwischenschicht voneinander isoliert sind.

5. Magnetplatte nach einem der Ansprüche 1—3, dadurch gekennzeichnet, daß die Behälter in der hinteren Platte der Umhüllung gebildet werden, wobei die Frontplatte und die hintere Platte adhäsiv so miteinander verbunden sind, daß die Behälter der hinteren Platte voneinander isoliert sind.

6. Magnetplatte nach einem der Ansprüche 1—3, dadurch gekennzeichnet, daß ein Bienenwabengehäuse zwischen der Frontplatte und der hinteren Platte der Umhüllung lokalisiert ist, wobei das Bienenwabengehäuse aus einzelnen Behältern besteht, die Frontplatte und die hintere Platte adhäsiv an den gegenüberliegenden Seiten des Bienenwabengehäuses befestigt sind, so daß die Behälter des Bienenwabengehäuses voneinander isoliert sind.

7. Magnetplatte nach Anspruch 6, dadurch gekennzeichnet, daß das Bienenwabengehäuse aus einem synthetischen Plastikmaterial oder einem mit Harz imprägnierten Papier besteht.

8. Magnetplatte nach einem der Ansprüche 1—3, dadurch gekennzeichnet, daß die Frontplatte und die hintere Platte integral als eine einstückige Struktur, die eine Vielzahl von länglichen Zellen oder Rohren darin besitzt, geformt sind, wobei die Zellen oder Rohre durch Stege oder Wände von der Struktur getrennt sind.

9. Magnetische Anzeigeeinrichtung, umfassend eine Magnetplatte gemäß einem der Ansprüche 1—8 und weiter umfassend einen magnetischen Zeichenstift, um die magnetischen Teilchen zu veranlassen, sich innerhalb des fluiden Gemisches zu bewegen, um eine Anzeige auf der Platte zu bilden.

10. Magnetische Anzeigevorrichtung, umfassend eine magnetische Anzeigeeinrichtung gemäß Anspruch 9, wobei die Vorrichtung einen Oberteil umfaßt, in welchem die Magnetplatte lokalisiert ist, wobei der Oberteil aus zwei identischen Hälften besteht, die miteinander durch kooperierende Stehbolzen und Einbuchtungen, die an den beiden Hälften gebildet sind, verbunden sind, wobei die Platte relativ zu dem Oberteil durch die Stehbolzen in Position gehalten wird.

11. Magnetische Anzeigevorrichtung nach Anspruch 10, dadurch gekennzeichnet, daß sie eine Basis umfaßt, mit der der Oberteil klappbar verbunden ist, so daß der Oberteil relativ zu der Basis bewegt werden kann und in einer horizontalen oder im wesentlichen horizontalen oder vertikalen oder im wesentlichen vertikalen Anordnung relativ zur der Basis lokalisiert werden kann.

12. Magnetische Anzeigevorrichtung gemäß Anspruch 11, dadurch gekennzeichnet, daß die Basis der Vorrichtung integrale Mittel umfaßt, um den Oberteil in der horizontalen oder im wesentlichen horizontalen oder vertikalen oder im wesentlichen vertikalen Anordnung zu halten.

13. Magnetische Anzeigevorrichtung, umfassend eine Basis und einen Oberteil, der klappbar damit verbunden ist, wobei der Oberteil eine Magnetplatte einschließt, die eine kantenversiegelte Umhüllung umfaßt, die aus einer transparenten oder transluzenten Frontplatte aus einem nichtmagnetischen Material und einer hinteren Platte aus nichtmagnetischem Material gebildet wird, wobei die Platten so im Abstand angeordnet sind, daß zwischen ihnen eine Kammer bereitgestellt wird, wobei die Kammer eine Vielzahl von Behältern und ein fluides Gemisch, das in der Kammer lokalisiert ist, umfaßt, wobei das fluide Gemisch aus einem magnetischen farbigen Pigment, einem Dispersionsmedium, einem oberflächenaktiven Dispergierungsmittel und einem Verdickungsmittel besteht, das magnetische farbige Pigment in der Form von magnetischen Partikeln aus fein zerteiltem Eisenpulver oder Eisenoxid vorliegt, das Dispersionsmedium ein Paraffinsystem, ein Nur-Wasser-System oder ein Paraffin/Wasser-System ist, das oberflächenaktive Dispergierungsmittel ein Ester einer ungesättigten organischen Säure mit hohem Molekulargewicht ist, der mit einem langkettigen Polyamin-amid neutralisiert ist, und das Verdickungsmittel ein auf Mizellen basierendes pseudoplastisches Verdickungsmittel ist, wobei die Vorrichtung einen magnetischen Zeichenstift umfaßt, um zu bewirken, daß sich die magnetischen Teilchen innerhalb des fluiden Gemisches unter Bildung einer Anzeige auf der Platte bewegen.

0 0 10 354

FIG.1

FIG.2

FIG.3

FIG.4

FIG.5

1

110

86

84A

80

112

84

_FIG. 6_

116

94

118

120

82

114

102

100

84

80

98

108

104

106

86

_FIG. 7_

2

FIG. 8

FIG. 9

_FIG.10_

_FIG.11_

FIG. 12